# EUROPÄISCHE PATENTSCHRIFT

(11) **EP 4 307 121 B1**
(45) Veröffentlichungstag und Bekanntmachung des Hinweises auf die Patenterteilung: **29.01.2025**
(21) Anmeldenummer: 23176378.0
(22) Anmeldetag: 31.05.2023
(51) Int. Cl.: G06F 11/36, G06N 20/00, G06F 18/24, G06F 30/00, G05B 19/00

(54) **COMPUTERIMPLEMENTIERTES VERFAHREN ZUM KONFIGURIEREN EINES VIRTUELLEN TESTSYSTEMS UND TRAININGSVERFAHREN**
COMPUTER-IMPLEMENTED METHOD FOR CONFIGURING A VIRTUAL TEST SYSTEM AND TRAINING METHOD
PROCÉDÉ MIS EN UVRE PAR ORDINATEUR POUR CONFIGURER UN SYSTÈME DE TEST VIRTUEL ET PROCÉDÉ D'ENTRAÎNEMENT

(30) Priorität: 11.07.2022 DE 102022117160
(43) Veröffentlichungstag der Anmeldung: 17.01.2024
(73) Patentinhaber: dSPACE GmbH, 33102 Paderborn (DE)
(72) Erfinder: Hildebrandt, Andre, 33102 Paderborn (DE)

(56) Entgegenhaltungen:
- US-A1- 2019 196 925
- US-A1- 2021 026 872

## Beschreibung

Die vorliegende Erfindung betrifft ein computerimplementiertes Verfahren zum Konfigurieren eines virtuellen Testsystems zum Testen von Fahrzeugfunktionen eines Kraftfahrzeugs.

Die Erfindung betrifft ferner ein computerimplementiertes Verfahren zum Bereitstellen eines trainierten Algorithmus maschinellen Lernens zum Konfigurieren eines virtuellen Testsystems zum Testen von Fahrzeugfunktionen eines Kraftfahrzeugs.

### Stand der Technik

In PC-basierten Simulationsplattformen für die Absicherung von Software elektronischer Steuergeräte (ECU), welche die Simulation einer Vielzahl unterschiedlicher Modelle - von Funktionsmodellen über Netzwerke virtueller Steuergeräte bis hin zu Bussystemen und Fahrzeugmodellen - ermöglichen, nimmt die Anzahl der simulierten Artefakte und damit der Aufwand für die Konfiguration des Simulationssystems stetig zu.

Neben einer Bus-Kommunikation bieten solche PC-basierten Simulationsplattformen ebenfalls einen Austausch von Daten zwischen den Artefakten über Ports. Dafür müssen zwischen den Artefakten Ausgangs-Ports mit Eingangs-Ports verbunden werden. Die Größenordnung solcher Ports liegt zwischen 100 und 10.000 Ports pro Artefakt.

Dabei gibt es prinzipiell zwei Wege die Verbindungen zu konfigurieren. Einerseits über eine graphische Benutzeroberfläche der Simulationsplattform z.B. via "Drag & Drop" und andererseits über eine Automatisierung durch maschinenlesbare Listen.

Eine Automatisierung z.B. über die Namen der Ports ist in der Regel fehleranfällig, da sich die Namen herkömmlicherweise leicht unterscheiden. Die Integration eines Steuergerätes in ein Simulationssystem führt in beiden Fällen somit zu einem signifikanten Aufwand.

US 2019/0196925 A1 offenbart ein Konfigurationssystem zum Konfigurieren eines zum Testen eines elektronischen Steuergeräts geeigneten Testsystems, wobei ein Konfigurationsdiagramm eine Mehrzahl von Hierarchieelementen aufweist und ein Hierarchieelement entweder ein Hierarchieelement oder mehrere Hierarchieelemente oder kein Hierarchieelement aufweist. Das Hierarchieelement weist einen Bezeichner auf, wobei ein Hierarchieelement Port(s) oder keinen Port aufweist, und wobei mindestens ein Hierarchieelement einer funktionalen Eigenschaft des zu konfigurierenden Testsystems zugeordnet ist, wobei in einem erweiterten Ansichtsmodus die Hierarchieelemente zumindest teilweise verschachtelt dargestellt werden und die Ports und Bezeichner untereinander dargestellt werden, wobei in einem zumindest teilweise eingeklappten Ansichtsmodus ein erster Satz von Hierarchieelementen so dargestellt wird, dass die Bezeichner nebeneinander dargestellt werden, wobei die Ports und Bezeichner sichtbar bleiben und die hierarchische Beziehung der Hierarchieelemente dargestellt bleibt.

US 2021/0026872 A1 offenbart ein Verfahren zur Klassifizierung von Datenfeldern eines Datensatzes. Ein Klassifikator, der für die Bestimmung von Konfidenzwerten für eine Vielzahl von Datenklassen für die Datenfelder konfiguriert ist, kann angewendet werden. Unter Verwendung der Konfidenzwerte können Datenklassenkandidaten identifiziert werden. Es können Datenfelder bestimmt werden, für die eine Vielzahl von Datenklassenkandidaten identifizierbar ist. Für die Datenklassenkandidaten kann anhand früherer benutzergewählter Datenklassenzuordnungen eine Wahrscheinlichkeit ermittelt werden, dass der jeweilige Datenklassenkandidat eine Datenklasse ist, der das jeweilige Datenfeld zuzuordnen ist. Die Datenfelder können anhand der Wahrscheinlichkeiten klassifiziert werden, um für die Datenfelder eine Datenklasse aus den Datenklassenkandidaten auszuwählen. Der Datensatz kann mit Metadaten versehen werden, die für die Datenfelder die Datenklassen identifizieren, denen die jeweiligen Datenfelder zugeordnet sind.

Demzufolge besteht ein Bedarf, bestehende Verfahren und Systeme zum Konfigurieren eines virtuellen Testsystems zum Testen von Fahrzeugfunktionen eines Kraftfahrzeugs dahingehend zu verbessern, dass eine automatisierte, benutzerfreundliche Integration des Steuergerätes in ein Simulationssystem ermöglicht wird, welche zudem einen reduzierten Zeitaufwand für den Benutzer sowie einen geringeren Verbrauch an Rechenressourcen mit sich bringt.

Es ist daher Aufgabe der Erfindung, ein computerimplementiertes Verfahren zum Konfigurieren eines virtuellen Testsystems zum Testen von Fahrzeugfunktionen eines Kraftfahrzeugs bereitzustellen, welches eine automatisierte, benutzerfreundliche Integration des Steuergerätes in ein Simulationssystem bei gleichzeitig verringertem Aufwand an Bearbeitungszeit durch den Benutzer und geringeren Rechenressourcen ermöglicht.

### Offenbarung der Erfindung

Die Aufgabe wird erfindungsgemäß gelöst durch ein computerimplementiertes Verfahren zum Konfigurieren eines virtuellen Testsystems zum Testen von Fahrzeugfunktionen eines Kraftfahrzeugs.

Das Verfahren umfasst ein Bereitstellen eines Datensatzes umfassend erste Daten einer Vielzahl von Eingangs-Ports eines zu testenden Artefakts und umfassend zweite Daten einer Vielzahl von Ausgangs-Ports zumindest eines weiteren zu testenden Artefakts.

Des Weiteren umfasst das Verfahren ein Anwenden eines Algorithmus maschinellen Lernens auf den Datensatz, wobei für jeden der Vielzahl von Eingangs-Ports des zu testenden Artefakts ein Konfidenzwert für jeden der Vielzahl von Ausgangs-Ports des zumindest einen weiteren zu testenden Artefakts bestimmt wird.

Das Verfahren umfasst darüber hinaus für jeden der Vielzahl von Eingangs-Ports des zu testenden Artefakts ein Zuweisen des den höchsten Konfidenzwert aufweisenden Ausgangs-Ports des zumindest einen weiteren zu testenden Artefakts in Abhängigkeit einer ersten Bedingung, ein Erstellen einer Liste von die höchsten Konfidenzwerte aufweisenden Ausgangs-Ports in Abhängigkeit einer zweiten Bedingung oder ein Nichtzuweisen eines Ausgangs-Ports in Abhängigkeit einer dritten Bedingung zum Konfigurieren einer Verbindung der Eingangs-Ports des zu testenden Artefakts zu passenden Ausgangs-Ports des zumindest einen weiteren zu testenden Artefakts.

Die Erfindung betrifft des Weiteren ein computerimplementiertes Verfahren zum Bereitstellen eines trainierten Algorithmus maschinellen Lernens zum Konfigurieren eines virtuellen Testsystems zum Testen von Fahrzeugfunktionen eines Kraftfahrzeugs.

Das Verfahren umfasst ein Bereitstellen eines ersten Trainingsdatensatzes umfassend erste Daten einer Vielzahl von Eingangs-Ports eines zu testenden Artefakts und umfassend zweite Daten einer Vielzahl von Ausgangs-Ports zumindest eines weiteren zu testenden Artefakts.

Ferner umfasst das Verfahren ein Bereitstellen eines zweiten Trainingsdatensatzes umfassend für jeden der Vielzahl von Eingangs-Ports des zu testenden Artefakts einen Konfidenzwert für jeden der Vielzahl von Ausgangs-Ports des zumindest einen weiteren zu testenden Artefakts.

Das Verfahren umfasst darüber hinaus ein Trainieren des Algorithmus maschinellen Lernens durch einen Optimierungsalgorithmus, welcher einen Extremwert einer Verlustfunktion, insbesondere unter Verwendung stochastischen Lernens, zum Konfigurieren des virtuellen Testsystems berechnet.

Die Erfindung betrifft ferner ein Computerprogramm mit Programmcode, um zumindest eines der erfindungsgemäßen Verfahren durchzuführen, wenn das Computerprogramm auf einem Computer ausgeführt wird.

Die Erfindung betrifft darüber hinaus einen computerlesbaren Datenträger mit Programmcode eines Computerprogramms, um zumindest eines der erfindungsgemäßen Verfahren durchzuführen, wenn das Computerprogramm auf einem Computer ausgeführt wird.

Algorithmen des maschinellen Lernens basieren darauf, dass Verfahren der Statistik verwendet werden, um eine Datenverarbeitungsanlage derart zu trainieren, dass diese eine bestimmte Aufgabe ausführen kann, ohne dass diese ursprünglich explizit hierzu programmiert wurde. Das Ziel des maschinellen Lernens besteht dabei darin, Algorithmen zu konstruieren, die aus Daten lernen und Vorhersagen treffen können. Diese Algorithmen erstellen mathematische Modelle, mit denen beispielsweise Daten klassifiziert werden können.

Zum Einsatz kommen derartige Algorithmen des maschinellen Lernens beispielsweise, wenn physikalische Modelle, das heißt auf physikalischen Gegebenheiten und/oder Abhängigkeiten basierende Modelle, an ihre Grenzen stoßen, beispielsweise aufgrund eines erhöhten Ressourcenverbrauchs.

Eine Idee der vorliegenden Erfindung ist es, die Erstellung der Verbindungen zwischen den Simulationsartefakten durch den Einsatz des Algorithmus maschinellen Lernens zu unterstützen bzw. zu automatisieren.

Der Algorithmus maschinellen Lernens, insbesondere ein neuronales Netz wird dabei derart trainiert, dass der Algorithmus erkennt zu welchem Eingangs-Port welcher Ausgangsport gehört.

Dazu verwendet der Algorithmus sowohl Namen, als auch Metadaten (z.B. Datentyp, Einheit, usw.). Zu jedem Eingang wird also eine Liste an passenden Ausgangs-Ports angelegt und ein Konfidenzwert für jeden Eintrag in der Liste ermittelt, der eine geschätzte Wahrscheinlichkeit darstellt, den richtigen Port verbinden zu wollen.

Ferner sind eine Mehrzahl von Bedingungen in Form von Schwellen für den Konfidenzwert definiert, aus welchen verschiedene Aktionen folgen. Liegt der Konfidenzwert beispielsweise über einer ersten, konfigurierbaren Schwelle, so verbindet der Algorithmus die zugehörigen Ausgänge mit den entsprechenden Eingängen und protokolliert die Aktion in einer Liste für den Anwender.

Ist der Konfidenzwert geringer als der erste Schwellwert, jedoch größer als eine zweite Schwelle, so schlägt der Algorithmus automatisch die entsprechende Verbindung vor, die der Nutzer annehmen muss. Alle anderen Vorschläge können beispielsweise in einer Liste angezeigt und durch einen Benutzer akzeptiert oder verworfen werden.

Die erfindungsgemäße Lösung ermöglicht somit in vorteilhafter Weise eine Vereinfachung sowie eine Verringerung eines Zeitaufwands bei der Konfiguration eines Simulationssystems. Ebenso kann eine Fehleranfälligkeit, die herkömmlicherweise mit einer manuellen Erstellung von Portverbindungen durch den Benutzer über eine graphische Benutzeroberfläche einhergeht, vermieden werden.

Das Anwenden des Algorithmus maschinellen Lernens auf den Datensatz, wobei für jeden der Vielzahl von Eingangs-Ports des zu testenden Artefakts ein Konfidenzwert für jeden der Vielzahl von Ausgangs-Ports des zumindest einen weiteren zu testenden Artefakts bestimmt wird, stellt eine Klassifizierung der Ausgangs-Ports entsprechend dem jeweils einem Ausgangs-Port zugewiesenen Konfidenzwert dar.

Der die Klassifizierung betreffende Konfidenzwert gibt dabei für jeden Ausgangs-Port eine Wahrscheinlichkeit für die Zugehörigkeit zu einem spezifischen Eingangs-Port an, wobei die Klasse ausgewählt wird, welche die höchste Wahrscheinlichkeit aufweist, sofern die erste Bedingung erfüllt ist, gemäß welcher ein Schwellwert mindestens erreicht werden muss, damit ein automatisches Zuweisen eines Ausgangs-Ports zu einem spezifischen Eingangs-Port durchgeführt wird.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung umfasst das Verfahren ferner, dass die erste Bedingung dadurch gegeben ist, dass falls der Konfidenzwert größer oder gleich einem vorgegebenen ersten Schwellwert, insbesondere größer oder gleich 99%, ist, der den höchsten Konfidenzwert aufweisende Ausgangs-Port des zumindest einen weiteren zu testenden Artefakts automatisch zugewiesen wird.

Ein Konfidenzwert, welcher größer oder gleich 99% beträgt, impliziert somit dass die restlichen Klassifikationsergebnisse, d.h. die restlichen ermittelten Ausgangs-Ports in Summe maximal 1% betragen. Somit kann davon ausgegangen werden, dass der betreffende, mit einem Konfidenzwert von größer oder gleich 99% bezifferte Ausgangs-Port korrekt ist, sodass der Algorithmus eine automatisierte Zuweisung des Ausgangs-Ports zu dem entsprechenden Eingangs-Port vornehmen kann.

Gemäß einer weiteren bevorzugten Weiterbildung umfasst das Verfahren, dass die zweite Bedingung dadurch gegeben ist, dass falls der Konfidenzwert geringer als der vorgegebene erste Schwellwert, insbesondere geringer 99%, und größer oder gleich einem vorgegebenen zweiten Schwellwert, insbesondere größer oder gleich 80%, ist, eine Liste vorgegebener Größe von die höchsten Konfidenzwerte aufweisenden Ausgangs-Ports erstellt wird.

Das Erstellen einer kurzen Liste weist den Vorteil auf, dass die darin enthaltenen Ausgangs-Ports einen relativ hohen Konfidenzwert aufweisen, so dass davon auszugehen ist, dass einer der Ausgangs-Ports korrekt ist.

Gemäß einer weiteren bevorzugten Weiterbildung umfasst das Verfahren, dass basierend auf der erstellten Liste vorgegebener Größe eine manuelle Auswahl, insbesondere durch einen Benutzer, des passenden Ausgangs-Ports treffbar ist.

Für den Benutzer ergibt sich dadurch der Vorteil, nicht eine Vielzahl möglicher Ausgangs-Ports analysieren bzw. vergleichen zu müssen, sondern aufgrund der getroffenen Vorauswahl lediglich aus einer kurzen Liste von Ausgangs-Ports den korrekten Ausgangs-Port auszuwählen hat.

Gemäß einer weiteren bevorzugten Weiterbildung umfasst das Verfahren ferner, dass die von der erstellten Liste umfassten Konfidenzwerte, insbesondere in aufsteigender oder absteigender Reihenfolge, nach Konfidenzwert sortiert sind, und wobei die Liste Konfidenzwerte umfasst, welche geringer als der vorgegebene erste Schwellwert, insbesondere geringer 99%, und größer oder gleich dem vorgegebenen zweiten Schwellwert, insbesondere größer oder gleich 80%, sind.

Die Sortierung der Konfidenzwerte vereinfacht dem Benutzer somit in vorteilhafter Weise ferner die Auswahl, da es wahrscheinlich ist, dass ein einen hohen Konfidenzwert aufweisender Ausgangs-Port korrekt ist. Der Benutzer hat ferner die Möglichkeit, keinen der vorgeschlagenen Ausgangs-Ports zu selektieren und die erstellte Liste abzulehnen.

Gemäß einer weiteren bevorzugten Weiterbildung umfasst das Verfahren, dass die dritte Bedingung dadurch gegeben ist, dass falls der Konfidenzwert geringer als der vorgegebene zweite Schwellwert, insbesondere geringer 80%, ist, kein Zuweisen eines Ausgangs-Ports durchgeführt wird.

Das Unterschreiten des vorgegebenen Schwellwerts für den Konfidenzwert hat somit zur Folge, dass das Klassifikationsergebnis verworfen wird, da nicht mit ausreichender Wahrscheinlichkeit feststellbar ist, welche Ausgangs-Ports in Frage kommen.

Dadurch kann in vorteilhafter Weise eine Fehlerhäufigkeit bei der Auswahl des Ausgangs-Ports verringert werden, da unwahrscheinliche Ergebnisse vorab verworfen werden.

Gemäß einer weiteren bevorzugten Weiterbildung umfasst das Verfahren, dass der Datensatz ferner dritte Daten einer Vielzahl von Ausgangs-Ports des zu testenden Artefakts und vierte Daten einer Vielzahl von Eingangs-Ports zumindest eines weiteren zu testenden Artefakts aufweist. Der Algorithmus maschinellen Lernens ist somit in der Lage, die Verknüpfung von Ausgangs-Ports zu Eingangs-Ports einer Vielzahl von Artefakten durchzuführen.

Gemäß einer weiteren bevorzugten Weiterbildung umfasst das Verfahren, dass der Datensatz Daten zu sämtlichen Eingangs-Ports und sämtlichen Ausgangs-Ports des zu testenden Artefakts und des zumindest einen weiteren zu testenden Artefakts oder eine von einem Benutzer getroffene oder automatisch vorgeschlagene Auswahl der Eingangs-Ports und Ausgangs-Ports des zu testenden Artefakts und des zumindest einen weiteren zu testenden Artefakts aufweist.

Die in den Datensatz enthaltenen Daten ermöglichen es dem Algorithmus maschinellen Lernens daher, eine Funktion zum Zuweisen von Ausgangs-Ports zu jedem der Eingangs-Ports eines jeweiligen Artefakts zu lernen.

Gemäß einer weiteren bevorzugten Weiterbildung umfasst das Verfahren, dass jede erfolgte Zuweisung eines Ausgangs-Ports des zumindest einen weiteren zu testenden Artefakts zu einem Eingangs-Port des zu testenden Artefakts in einer Log-Datei protokolliert wird.

Dies bietet den Vorteil, dass für den Anwender im Nachhinein nachvollziehbar ist, was er oder sie selbst ausgewählt hat und was der Algorithmus ausgewählt hat. In dem Log-Datei ist ferner enthalten, welche Ports der Algorithmus miteinander verbunden hat. Damit können eventuelle Fehler identifiziert und somit im Nachhinein manuell korrigiert werden.

Gemäß einer weiteren bevorzugten Weiterbildung umfasst das Verfahren, dass das zu testende Artefakt und das zumindest eine weitere zu testende Artefakt ein virtuelles Steuergerät und/oder Umgebungsmodell des Kraftfahrzeugs sind.

Somit kann nach Verschalten der Eingangs-Ports mit den entsprechenden Ausgangs-Ports durch den Algorithmus eine Simulation eines Steuergeräts und/oder eines Umgebungsmodells, insbesondere einer softwarebasierten Fahrzeugfunktion wie beispielsweise einem adaptiven Abstandstempomat durchgeführt werden.

Gemäß einer weiteren bevorzugten Weiterbildung umfasst das Verfahren, dass der Optimierungsalgorithmus unter Verwendung von Namen, insbesondere alphabetischen oder alphanumerischen Bezeichnungen, und/oder Metadaten, insbesondere einem Datentyp, der Eingangs-Ports des zu testenden Artefakts eine Zuweisung von Ausgangs-Ports des zumindest einen weiteren zu testenden Artefakts berechnet.

Durch Verwendung einer Mehrzahl von Datentypen und Informationsquellen kann in vorteilhafter Weise eine Prädiktionsgenauigkeit bei dem Verschalten der Eingangs-Ports mit den entsprechenden Ausgangs-Ports erhöht werden.

Gemäß einer weiteren bevorzugten Weiterbildung umfasst das Verfahren, dass die Konfidenzwerte des zweiten Trainingsdatensatzes geringer als ein vorgegebener erster Schwellwert, insbesondere geringer als 99%, und größer oder gleich einem vorgegebenen zweiten Schwellwert, insbesondere größer oder gleich 80%, sind.

Der Algorithmus wird somit vorteilhafter Weise unter Verwendung von Daten trainiert, welche mit hoher Wahrscheinlichkeit ein richtiges Klassifizierungsergebnis zur Identifizierung des entsprechenden Ausgangs-Ports angeben.

Gemäß einer weiteren bevorzugten Weiterbildung umfasst das Verfahren, dass der Algorithmus maschinellen Lernens basierend auf einer durch einen Benutzer erfolgten Annahme oder Nicht-Annahme eines durch den Algorithmus maschinellen Lernens durchgeführten Zuweisens eines einen höchsten Konfidenzwert aufweisenden Ausgangs-Ports oder eines Nichtzuweisens eines Ausgangs-Ports des zumindest einen weiteren zu testenden Artefakts trainiert wird.

Dadurch kann durch fortlaufendes Nutzerfeedback eine Weiterentwicklung des Algorithmus durchgeführt und somit eine Genauigkeit des Algorithmus verbessert bzw. eine Trefferrate erhöht werden.

Die hierin beschriebenen Merkmale des Verfahrens sind ebenfalls auf andere virtuelle Umgebungen wie beispielsweise das Konfigurieren anderer Umfeldmodelle in verschiedenen Umgebungen anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines computerimplementierten Verfahrens zum Konfigurieren eines virtuellen Testsystems zum Testen von Fahrzeugfunktionen eines Kraftfahrzeugs gemäß einer bevorzugten Ausführungsform der Erfindung;
- Fig. 2: ein Ablaufdiagramm eines computerimplementierten Verfahrens zum Bereitstellen eines trainierten Algorithmus maschinellen Lernens zum Konfigurieren eines virtuellen Testsystems zum Testen von Fahrzeugfunktionen eines Kraftfahrzeugs gemäß der bevorzugten Ausführungsform der Erfindung; und
- Fig. 3: eine schematische Darstellung eines Systems zum Konfigurieren eines virtuellen Testsystems zum Testen von Fahrzeugfunktionen eines Kraftfahrzeugs gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

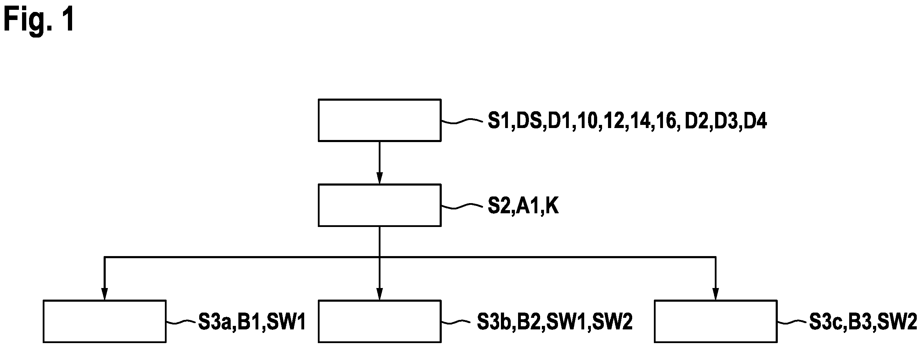

Das in Fig. 1 gezeigte Verfahren umfasst ein Bereitstellen S1 eines Datensatzes DS umfassend erste Daten D1 einer Vielzahl von Eingangs-Ports 10 eines zu testenden Artefakts 12 und umfassend zweite Daten D2 einer Vielzahl von Ausgangs-Ports 14 zumindest eines weiteren zu testenden Artefakts 16.

Des Weiteren umfasst das Verfahren ein Anwenden S2 eines Algorithmus maschinellen Lernens A1 auf den Datensatz DS, wobei für jeden der Vielzahl von Eingangs-Ports 10 des zu testenden Artefakts 12 ein Konfidenzwert K für jeden der Vielzahl von Ausgangs-Ports 14 des zumindest einen weiteren zu testenden Artefakts 16 bestimmt wird.

Das Verfahren umfasst ferner für jeden der Vielzahl von Eingangs-Ports 10 des zu testenden Artefakts 12 ein Zuweisen S3a des den höchsten Konfidenzwert K aufweisenden Ausgangs-Ports 14 des zumindest einen weiteren zu testenden Artefakts 16 in Abhängigkeit einer ersten Bedingung B1, ein Erstellen S3b einer Liste von die höchsten Konfidenzwerte K aufweisenden Ausgangs-Ports 14 in Abhängigkeit einer zweiten Bedingung B2 oder ein Nichtzuweisen S3c eines Ausgangs-Ports 14 in Abhängigkeit einer dritten Bedingung B3 zum Konfigurieren einer Verbindung der Eingangs-Ports 10 des zu testenden Artefakts 12 zu passenden Ausgangs-Ports 14 des zumindest einen weiteren zu testenden Artefakts 16.

Die erste Bedingung B1 ist dadurch gegeben, dass falls der Konfidenzwert K größer oder gleich einem vorgegebenen ersten Schwellwert SW1, insbesondere größer oder gleich 99%, ist, der den höchsten Konfidenzwert K aufweisende Ausgangs-Port 14 des zumindest einen weiteren zu testenden Artefakts 16 automatisch zugewiesen wird.

Die zweite Bedingung B2 ist ferner dadurch gegeben, dass falls der Konfidenzwert K geringer als der vorgegebene erste Schwellwert SW1, insbesondere geringer 99%, und größer oder gleich einem vorgegebenen zweiten Schwellwert SW2, insbesondere größer oder gleich 80%, ist, eine Liste vorgegebener Größe von die höchsten Konfidenzwerte K aufweisenden Ausgangs-Ports 14 erstellt wird.

Basierend auf der erstellten Liste vorgegebener Größe ist sodann eine manuelle Auswahl, insbesondere durch einen Benutzer, des passenden Ausgangs-Ports 14 treffbar.

Die von der erstellten Liste umfassten Konfidenzwerte K, insbesondere in aufsteigender oder absteigender Reihenfolge, sind dabei nach Konfidenzwert K sortiert. Die Liste umfasst ferner Konfidenzwerte K, welche geringer als der vorgegebene erste Schwellwert SW1, insbesondere geringer 99%, und größer oder gleich dem vorgegebenen zweiten Schwellwert SW2, insbesondere größer oder gleich 80%, sind.

Die dritte Bedingung B3 ist dadurch gegeben, dass falls der Konfidenzwert K geringer als der vorgegebene zweite Schwellwert SW2, insbesondere geringer 80%, ist, kein Zuweisen S3c eines Ausgangs-Ports 14 durchgeführt wird.

Der Datensatz DS weist ferner dritte Daten D3 einer Vielzahl von Ausgangs-Ports 14 des zu testenden Artefakts 12 und vierte Daten D4 einer Vielzahl von Eingangs-Ports 10 zumindest eines weiteren zu testenden Artefakts 16 auf.

Der Datensatz DS weist des Weiteren Daten zu sämtlichen Eingangs-Ports 10 und sämtlichen Ausgangs-Ports 14 des zu testenden Artefakts 12 und des zumindest einen weiteren zu testenden Artefakts 16 oder eine von einem Benutzer getroffene oder automatisch vorgeschlagene Auswahl der Eingangs-Ports 10 und Ausgangs-Ports 14 des zu testenden Artefakts 12 und des zumindest einen weiteren zu testenden Artefakts 16 auf.

Jede erfolgte Zuweisung eines Ausgangs-Ports 14 des zumindest einen weiteren zu testenden Artefakts 16 zu einem Eingangs-Port 10 des zu testenden Artefakts 12 wird dabei in einer Log-Datei protokolliert. Das zu testende Artefakt 12 und das zumindest eine weitere zu testende Artefakt 16 sind ein virtuelles Steuergerät des Kraftfahrzeugs. Alternativ können das zu testende Artefakt 12 und das zumindest eine weitere zu testende Artefakt 16 durch ein Umgebungsmodell gegeben sein.

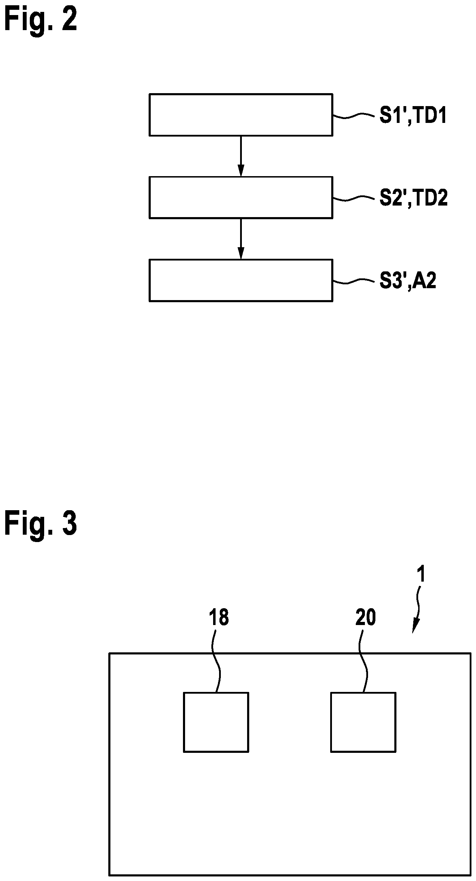

Fig. 2 zeigt ein Ablaufdiagramm eines computerimplementierten Verfahrens zum Bereitstellen eines trainierten Algorithmus maschinellen Lernens A1 zum Konfigurieren eines virtuellen Testsystems zum Testen von Fahrzeugfunktionen eines Kraftfahrzeugs gemäß der bevorzugten Ausführungsform der Erfindung.

Das Verfahren umfasst ein Bereitstellen S1' eines ersten Trainingsdatensatzes TD1 umfassend erste Daten D1 einer Vielzahl von Eingangs-Ports 10 eines zu testenden Artefakts 12 und umfassend zweite Daten D2 einer Vielzahl von Ausgangs-Ports 14 zumindest eines weiteren zu testenden Artefakts 16.

Des Weiteren umfasst das Verfahren ein Bereitstellen S2` eines zweiten Trainingsdatensatzes TD2 umfassend für jeden der Vielzahl von Eingangs-Ports 10 des zu testenden Artefakts 12 einen Konfidenzwert K für jeden der Vielzahl von Ausgangs-Ports 14 des zumindest einen weiteren zu testenden Artefakts 16.

Das Verfahren umfasst überdies ein Trainieren S3' des Algorithmus maschinellen Lernens A1 durch einen Optimierungsalgorithmus A2, welcher einen Extremwert einer Verlustfunktion, insbesondere unter Verwendung stochastischen Lernens, zum Konfigurieren des virtuellen Testsystems berechnet.

Der Optimierungsalgorithmus A2 berechnet unter Verwendung von Namen, insbesondere alphabetischen oder alphanumerischen Bezeichnungen, und/oder Metadaten, insbesondere einem Datentyp, der Eingangs-Ports 10 des zu testenden Artefakts 12 eine Zuweisung von Ausgangs-Ports 14 des zumindest einen weiteren zu testenden Artefakts 16.

Die Konfidenzwerte K des zweiten Trainingsdatensatzes DS sind geringer als ein vorgegebener erster Schwellwert, insbesondere geringer als 99%, und größer oder gleich einem vorgegebenen zweiten Schwellwert SW2, insbesondere größer oder gleich 80%.

Der Algorithmus maschinellen Lernens A1 wird ferner, zusätzlich zu dem ersten Trainingsdatensatz TD1 und dem zweiten Trainingsdatensatz TD2 basierend auf einer durch einen Benutzer erfolgten Annahme oder Nicht-Annahme eines durch den Algorithmus maschinellen Lernens A1 durchgeführten Zuweisens eines einen höchsten Konfidenzwert K aufweisenden Ausgangs-Ports 14 oder eines Nichtzuweisens eines Ausgangs-Ports 14 des zumindest einen weiteren zu testenden Artefakts 16 trainiert.

Fig. 3 zeigt eine schematische Darstellung eines Systems 1 zum Konfigurieren eines virtuellen Testsystems zum Testen von Fahrzeugfunktionen eines Kraftfahrzeugs gemäß der bevorzugten Ausführungsform der Erfindung.

Das System 1 umfasst einen Datenspeicher 18, welcher konfiguriert ist, einen Datensatz DS umfassend erste Daten D1 einer Vielzahl von Eingangs-Ports 10 eines zu testenden Artefakts 12 und umfassend zweite Daten D2 einer Vielzahl von Ausgangs-Ports 14 zumindest eines weiteren zu testenden Artefakts 16 bereitzustellen.

Ferner umfasst das System 1 eine Berechnungseinheit 20, welche konfiguriert ist, einen Algorithmus maschinellen Lernens A1 auf den Datensatz DS anzuwenden, wobei für jeden der Vielzahl von Eingangs-Ports 10 des zu testenden Artefakts 12 ein Konfidenzwert K für jeden der Vielzahl von Ausgangs-Ports 14 des zumindest einen weiteren zu testenden Artefakts 16 bestimmbar ist.

Darüber hinaus umfasst das System 1, dass die Berechnungseinheit 20 ferner konfiguriert ist, für jeden der Vielzahl von Eingangs-Ports 10 des zu testenden Artefakts 12, ein Zuweisen des den höchsten Konfidenzwert K aufweisenden Ausgangs-Ports 14 des zumindest einen weiteren zu testenden Artefakts 16 in Abhängigkeit einer ersten Bedingung B1, ein Erstellen einer Liste von die höchsten Konfidenzwerte K aufweisenden Ausgangs-Ports 14 in Abhängigkeit einer zweiten Bedingung B2 oder ein Nichtzuweisen eines Ausgangs-Ports 14 in Abhängigkeit einer dritten Bedingung B3 zum Konfigurieren einer Verbindung der Eingangs-Ports 10 des zu testenden Artefakts 12 zu passenden Ausgangs-Ports 14 des zumindest einen weiteren zu testenden Artefakts 16 durchzuführen.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken. Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche abzuweichen.

Im Allgemeinen beabsichtigt diese Anmeldung, Änderungen bzw. Anpassungen oder Variationen der hierin dargestellten Ausführungsformen abzudecken. Beispielsweise kann eine Reihenfolge der Verfahrensschritte abgeändert werden. Das Verfahren kann ferner zumindest abschnittsweise sequentiell oder parallel durchgeführt werden.

## Patentansprüche

1. Computerimplementiertes Verfahren zum Konfigurieren eines virtuellen Testsystems zum Testen von Fahrzeugfunktionen eines Kraftfahrzeugs, mit den Schritten:
Bereitstellen (S1) eines Datensatzes (DS) umfassend erste Daten (D1) einer Vielzahl von Eingangs-Ports (10) eines zu testenden Artefakts (12) und umfassend zweite Daten (D2) einer Vielzahl von Ausgangs-Ports (14) zumindest eines weiteren zu testenden Artefakts (16); **gekennzeichnet durch**:
Anwenden (S2) eines Algorithmus maschinellen Lernens (A1) auf den Datensatz (DS), wobei für jeden der Vielzahl von Eingangs-Ports (10) des zu testenden Artefakts (12) ein Konfidenzwert (K) für jeden der Vielzahl von Ausgangs-Ports (14) des zumindest einen weiteren zu testenden Artefakts (16) bestimmt wird;
für jeden der Vielzahl von Eingangs-Ports (10) des zu testenden Artefakts (12), Zuweisen (S3a) des den höchsten Konfidenzwert (K) aufweisenden Ausgangs-Ports (14) des zumindest einen weiteren zu testenden Artefakts (16) in Abhängigkeit einer ersten Bedingung (B1), Erstellen (S3b) einer Liste von die höchsten Konfidenzwerte (K) aufweisenden Ausgangs-Ports (14) in Abhängigkeit einer zweiten Bedingung (B2) oder
Nichtzuweisen (S3c) eines Ausgangs-Ports (14) in Abhängigkeit einer dritten Bedingung (B3) zum Konfigurieren einer Verbindung der Eingangs-Ports (10) des zu testenden Artefakts (12) zu passenden Ausgangs-Ports (14) des zumindest einen weiteren zu testenden Artefakts (16).

2. Computerimplementiertes Verfahren nach Anspruch 1, wobei die erste Bedingung (B1) dadurch gegeben ist, dass falls der Konfidenzwert (K) größer oder gleich einem vorgegebenen ersten Schwellwert (SW1), insbesondere größer oder gleich 99%, ist, der den höchsten Konfidenzwert (K) aufweisende Ausgangs-Port (14) des zumindest einen weiteren zu testenden Artefakts (16) automatisch zugewiesen wird.

3. Computerimplementiertes Verfahren nach Anspruch 2, wobei die zweite Bedingung (B2) dadurch gegeben ist, dass falls der Konfidenzwert (K) geringer als der vorgegebene erste Schwellwert (SW1), insbesondere geringer 99%, und größer oder gleich einem vorgegebenen zweiten Schwellwert (SW2), insbesondere größer oder gleich 80%, ist, eine Liste vorgegebener Größe von die höchsten Konfidenzwerte (K) aufweisenden Ausgangs-Ports (14) erstellt wird.

4. Computerimplementiertes Verfahren nach Anspruch 3, wobei basierend auf der erstellten Liste vorgegebener Größe eine manuelle Auswahl, insbesondere durch einen Benutzer, des passenden Ausgangs-Ports (14) treffbar ist.

5. Computerimplementiertes Verfahren nach einem der Ansprüche 3 oder 4, wobei die von der erstellten Liste umfassten Konfidenzwerte (K), insbesondere in aufsteigender oder absteigender Reihenfolge, nach Konfidenzwert (K) sortiert sind, und wobei die Liste Konfidenzwerte (K) umfasst, welche geringer als der vorgegebene erste Schwellwert (SW1), insbesondere geringer 99%, und größer oder gleich dem vorgegebenen zweiten Schwellwert (SW2), insbesondere größer oder gleich 80%, sind.

6. Computerimplementiertes Verfahren nach einem der Ansprüche 3 bis 5, wobei die dritte Bedingung (B3) dadurch gegeben ist, dass falls der Konfidenzwert (K) geringer als der vorgegebene zweite Schwellwert (SW2), insbesondere geringer 80%, ist, kein Zuweisen (S3c) eines Ausgangs-Ports (14) durchgeführt wird.

7. Computerimplementiertes Verfahren nach einem der vorhergehenden Ansprüche, wobei der Datensatz (DS) ferner dritte Daten (D3) einer Vielzahl von Ausgangs-Ports (14) des zu testenden Artefakts (12) und vierte Daten (D4) einer Vielzahl von Eingangs-Ports (10) zumindest eines weiteren zu testenden Artefakts (16) aufweist.

8. Computerimplementiertes Verfahren nach Anspruch 7, wobei der Datensatz (DS) Daten zu sämtlichen Eingangs-Ports (10) und sämtlichen Ausgangs-Ports (14) des zu testenden Artefakts (12) und des zumindest einen weiteren zu testenden Artefakts (16) oder eine von einem Benutzer getroffene oder automatisch vorgeschlagene Auswahl der Eingangs-Ports (10) und Ausgangs-Ports (14) des zu testenden Artefakts (12) und des zumindest einen weiteren zu testenden Artefakts (16) aufweist.

9. Computerimplementiertes Verfahren nach einem der vorhergehenden Ansprüche, wobei jede erfolgte Zuweisung eines Ausgangs-Ports (14) des zumindest einen weiteren zu testenden Artefakts (16) zu einem Eingangs-Port (10) des zu testenden Artefakts (12) in einer Log-Datei protokolliert wird.

10. Computerimplementiertes Verfahren nach einem der vorhergehenden Ansprüche, wobei das zu testende Artefakt (12) und das zumindest eine weitere zu testende Artefakt (16) ein virtuelles Steuergerät und/oder Umgebungsmodell des Kraftfahrzeugs sind.

11. Computerimplementiertes Verfahren zum Bereitstellen eines trainierten Algorithmus maschinellen Lernens (A1), welcher in einem Verfahren nach einem der Ansprüche 1 bis 10 zum Konfigurieren eines virtuellen Testsystems zum Testen von Fahrzeugfunktionen eines Kraftfahrzeugs angewendet wird, mit den Schritten:
Bereitstellen (S1') eines ersten Trainingsdatensatzes (TD1) umfassend erste Daten (D1) einer Vielzahl von Eingangs-Ports (10) eines zu testenden Artefakts (12) und umfassend zweite Daten (D2) einer Vielzahl von Ausgangs-Ports (14) zumindest eines weiteren zu testenden Artefakts (16);
Bereitstellen (S2') eines zweiten
Trainingsdatensatzes (TD2) umfassend für jeden der Vielzahl von Eingangs-Ports (10) des zu testenden Artefakts (12) einen Konfidenzwert (K) für jeden der Vielzahl von Ausgangs-Ports (14) des zumindest einen weiteren zu testenden Artefakts (16); und Trainieren (S3') des Algorithmus maschinellen Lernens (A1) durch einen Optimierungsalgorithmus (A2),
welcher einen Extremwert einer Verlustfunktion, insbesondere unter Verwendung stochastischen Lernens, zum Konfigurieren des virtuellen Testsystems berechnet.

12. Computerimplementiertes Verfahren nach Anspruch 11, wobei der Optimierungsalgorithmus (A2) unter Verwendung von Namen, insbesondere alphabetischen oder alphanumerischen Bezeichnungen, und/oder Metadaten, insbesondere einem Datentyp, der Eingangs-Ports (10) des zu testenden Artefakts (12) eine Zuweisung von Ausgangs-Ports (14) des zumindest einen weiteren zu testenden Artefakts (16) berechnet.

13. Computerimplementiertes Verfahren nach Anspruch 11 oder 12, wobei die Konfidenzwerte (K) des zweiten Trainingsdatensatzes (DS) geringer als ein vorgegebener erster Schwellwert, insbesondere geringer als 99%, und größer oder gleich einem vorgegebenen zweiten Schwellwert (SW2), insbesondere größer oder gleich 80%, sind.

14. Computerimplementiertes Verfahren nach einem der Ansprüche 11 bis 13, wobei der Algorithmus maschinellen Lernens (A1) basierend auf einer durch einen Benutzer erfolgten Annahme oder Nicht-Annahme eines durch den Algorithmus maschinellen Lernens (A1) durchgeführten Zuweisens eines einen höchsten Konfidenzwert (K) aufweisenden Ausgangs-Ports (14) oder eines Nichtzuweisens eines Ausgangs-Ports (14) des zumindest einen weiteren zu testenden Artefakts (16) trainiert wird.

15. Computerprogramm mit Programmcode, um zumindest eines der Verfahren nach einem der Ansprüche 1 bis 10 und 11 bis 14 auszuführen, wenn das Computerprogramm auf einem Computer ausgeführt wird.

16. Computerlesbarer Datenträger mit Programmcode eines Computerprogramms, um zumindest eines der Verfahren nach einem der Ansprüche 1 bis 10 und 11 bis 14 durchzuführen, wenn das Computerprogramm auf einem Computer ausgeführt wird.

## Claims

1. A computer-implemented method for configuring a virtual test system for testing vehicle functions of a motor vehicle, comprising the steps of:
providing (S1) a data set (DS) comprising first data (D1) of a plurality of input ports (10) of an artifact (12) to be tested and comprising second data (D2) of a plurality of output ports (14) of at least one further artifact (16) to be tested; **characterized by**:
applying (S2) a machine learning algorithm (A1) to the data set (DS), wherein for each of the plurality of input ports (10) of the artifact (12) to be tested, a confidence value (K) is determined for each of the plurality of output ports (14) of the at least one further artifact (16) to be tested; for each of the plurality of input ports (10) of the artifact (12) to be tested, assigning (S3a) the output port (14) of the at least one further artifact (16) to be tested having the highest confidence value (K) depending on a first condition (B1); generating (S3b) a list of output ports (14) having the highest confidence values (K) depending on a second condition (B2), or not assigning (S3c) an output port (14) depending on a third condition (B3) for configuring a connection of the input ports (10) of the artifact (12) to be tested to matching output ports (14) of the at least one further artifact (16) to be tested.

2. The computer-implemented method according to claim 1,
wherein the first condition (B1) is given by the fact that if the confidence value (K) is greater than or equal to a specified first threshold value (SW1), in particular greater than or equal to 99%, then the output port (14) of the at least one further artifact (16) to be tested having the highest confidence value (K) is automatically assigned.

3. The computer-implemented method according to claim 2,
wherein the second condition (B2) is given by the fact that if the confidence value (K) is less than the specified first threshold value (SW1), in particular less than 99%, and greater than or equal to a specified threshold value (SW2), in particular greater than or equal to 80%, then a list of a specified size of output ports (14) having the highest confidence values (K) is generated.

4. The computer-implemented method according to claim 3,
wherein a manual selection, in particular by a user, of the appropriate output port (14) can be made based on the generated list of specified size

5. The computer-implemented method according to any one of claims 3 or 4, wherein the confidence values (K) comprised by the generated list are sorted by confidence value (K), in particular in ascending or descending order, and wherein the list comprises confidence values (K) of less than the first threshold value (SW1), in particular less than 99%, and greater than or equal to the specified second threshold value (SW2), in particular greater than or equal to 80%.

6. The computer-implemented method according to any one of claims 3 to 5, wherein the third condition (B3) is given by the fact that if the confidence value (K) is less than the specified second threshold value (SW2), in particular less than 80%, then no assigning (S3c) of an output port (14) is performed.

7. The computer-implemented method according to any one of the preceding claims, wherein the data set (DS) further comprises third data (D3) of a plurality of output ports (14) of the artifact (12) to be tested and fourth data (D4) of a plurality of input ports (10) of at least one further artifact (16) to be tested.

8. The computer-implemented method according to claim 7,
wherein the data set (DS) comprises data on all input ports (10) and all output ports (14) of the artifact (12) to be tested and the at least one further artifact (16) to be tested, or a selection, made by a user or suggested automatically, of input ports (10) and output ports (14) of the artifact (12) to be tested and of the at least one further artifact (16) to be tested

9. The computer-implemented method according to any one of the preceding claims, wherein each assigning of an output port (14) of the at least one further artifact (16) to be tested to an input port (10) of the artifact (12) to be tested is logged in a log file.

10. The computer-implemented method according to any one of the preceding claims, wherein the artifact (12) to be tested and the at least one further artifact (16) to be tested are a virtual control device and/or environment model of the motor vehicle.

11. A computer-implemented method for providing a trained machine learning algorithm (A1) applied in a method according to any one of claims 1 to 10 for configuring a virtual test system for testing vehicle functions of a motor vehicle, comprising the steps of:
providing (S1') a first training data set (TD1) comprising first data (D1) of a plurality of input ports (10) of an artifact (12) to be tested and comprising second data (D2) of a plurality of output ports (14) of at least one further artifact (16) to be tested;
providing (S2') a second training data set (TD2) comprising, for each of the plurality of input ports (10) of the artifact (12) to be tested, a confidence value (K) for each of the plurality of output ports (14) of the at least one further artifact (16) to be tested; and training (S3') the machine learning algorithm (A1) by an optimization algorithm (A2), as an extreme value of a loss function, in particular using stochastic learning, for configuring the virtual test system.

12. The computer-implemented method according to claim 11, wherein the optimization algorithm (A2) uses names, in particular alphabetic or alphanumeric designations, and/or metadata, in particular a data type, of the input ports (10) of the artifact (12) to be tested for calculating an assigning of output ports (14) of the at least one further artifact to be tested (16).

13. The computer-implemented method according to claim 11 or 12, wherein the confidence values (K) of the second training data set (DS) are less than a first specified threshold value, in particular less than 99%, and greater than or equal to a specified second threshold value (SW2), in particular greater than or equal to 80%.

14. The computer-implemented method according to any one of claims 11 to 13, wherein the machine learning algorithm (A1) is trained based on a user accepting or not accepting a value assigned by the machine learning algorithm (A1) to an output port (14) having a highest confidence value (K) or not assigned to an output port (14) of at least one further artifact (16) to be tested

15. A computer program having program code for performing at least one of the methods according to any one of claims 1 to 10 and 11 to 14 when the computer program is executed on a computer.

16. A computer-readable data carrier having program code of a computer program for performing at least one of the methods according to any one of claims 1 to 10 and 11 to 14 when the computer program is executed on a computer.

## Revendications

1. Procédé mis en oeuvre sur ordinateur pour configurer un système de test virtuel destiné à tester des fonctions de véhicule d'un véhicule à moteur, comprenant les étapes :
mise à disposition (S1) d'un ensemble de données (DS) comprenant de premières données (D1) d'une pluralité de ports d'entrée (10) d'un artefact (12) à tester et comprenant de deuxièmes données (D2) d'une pluralité de ports de sortie (14) d'au moins un autre artefact à tester (16) ; **caractérisé par** :
appliquer (S2) un algorithme d'apprentissage automatique (A1) à l'ensemble de données (DS), sachant que, pour chacun de la pluralité de ports d'entrée (10) de l'artefact (12) à tester, une valeur de confiance (K) est déterminée pour chacun de la pluralité de ports de sortie (14) de l'au moins un autre artefact (16) à tester ;
pour chacun de la pluralité de ports d'entrée (10) de l'artefact (12) à tester, attribuer (S3a) le port de sortie (14) présentant la valeur de confiance (K) la plus élevée de l'au moins un autre artefact (16) à tester en fonction d'une première condition (B1), établir (S3b) une liste de ports de sortie (14) présentant les valeurs de confiance (K) les plus élevées en fonction d'une deuxième condition (B2) ou ne pas attribuer (S3c) un port de sortie (14) en fonction d'une troisième condition (B3) pour configurer une connexion des ports d'entrée (10) de l'artefact (12) à tester à des ports de sortie (14) adéquats de l'au moins un autre artefact (16) à tester.

2. Procédé mis en oeuvre sur ordinateur selon la revendication 1, la première condition (B1) étant donnée par le fait que, si la valeur de confiance (K) est supérieure ou égale à une première valeur seuil (SW1) prédéterminée, en particulier supérieure ou égale à 99 %, le port de sortie (14) présentant la valeur de confiance (K) la plus élevée de l'au moins un autre artefact (16) à tester est attribué automatiquement.

3. Procédé mis en oeuvre sur ordinateur selon la revendication 2, la deuxième condition (B2) étant donnée par le fait que, si la valeur de confiance (K) est inférieure à la première valeur seuil (SW1) prédéterminée, en particulier inférieure à 99 %, et supérieure ou égale à une deuxième valeur seuil (SW2) prédéterminée, en particulier supérieure ou égale à 80 %, une liste de taille prédéterminée de ports de sortie (14) présentant les valeurs de confiance (K) les plus élevées est établie.

4. Procédé mis en oeuvre sur ordinateur selon la revendication 3, dans lequel, sur la base de la liste établie de taille prédéterminée, une sélection manuelle du port de sortie (14) adéquat peut être effectuée, en particulier par un utilisateur.

5. Procédé mis en oeuvre sur ordinateur selon l'une des revendications 3 ou 4, les valeurs de confiance (K) comprises dans la liste établie étant classées, en particulier dans l'ordre croissant ou décroissant, par valeur de confiance (K), et la liste comprenant des valeurs de confiance (K) qui sont inférieures à la première valeur seuil (SW1) prédéterminée, en particulier inférieures à 99 %, et supérieures ou égales à la deuxième valeur seuil (SW2) prédéterminée, en particulier supérieures ou égales à 80 %.

6. Procédé mis en oeuvre sur ordinateur selon l'une des revendications 3 à 5, la troisième condition (B3) étant donnée par le fait que, si la valeur de confiance (K) est inférieure à la deuxième valeur seuil (SW2) prédéterminée, en particulier inférieure à 80 %, aucune attribution (S3c) d'un port de sortie (14) n'est effectuée.

7. Procédé mis en oeuvre sur ordinateur selon l'une des revendications précédentes, l'ensemble de données (DS) comprenant en outre de troisièmes données (D3) d'une pluralité de ports de sortie (14) de l'artefact (12) à tester et de quatrièmes données (D4) d'une pluralité de ports d'entrée (10) d'au moins un autre artefact (16) à tester.

8. Procédé mis en oeuvre sur ordinateur selon la revendication 7, l'ensemble de données (DS) comprenant des données concernant tous les ports d'entrée (10) et tous les ports de sortie (14) de l'artefact (12) à tester et de l'au moins un autre artefact (16) à tester ou une sélection de ports d'entrée (10) et de ports de sortie (14) de l'artefact (12) à tester et de l'au moins un autre artefact à tester (16) effectuée par un utilisateur ou proposée automatiquement.

9. Procédé mis en oeuvre sur ordinateur selon l'une des revendications précédentes, chaque attribution effectuée d'un port de sortie (14) de l'au moins un autre artefact (16) à tester à un port d'entrée (10) de l'artefact (12) à tester est journalisée dans un fichier journal.

10. Procédé mis en oeuvre sur ordinateur selon l'une des revendications précédentes, l'artefact (12) à tester et l'au moins un autre artefact (16) à tester étant un appareil de commande et/ou modèle d'environnement virtuel du véhicule à moteur.

11. Procédé mis en oeuvre sur ordinateur pour fournir un algorithme d'apprentissage automatique entraîné (A1), qui est appliqué dans un procédé selon l'une des revendications 1 à 10 pour configurer un système de test virtuel destiné à tester des fonctions de véhicule d'un véhicule à moteur, comprenant les étapes :
fournir (S1') un premier ensemble de données d'apprentissage (TD1) comprenant des premières données (D1) d'une pluralité de ports d'entrée (10) d'un artefact (12) à tester et comprenant des deuxièmes données (D2) d'une pluralité de ports de sortie (14) d'au moins un autre artefact (16) à tester ;
fournir (S2') un deuxième ensemble de données d'apprentissage (TD2) comprenant, pour chacun de la pluralité de ports d'entrée (10) de l'artefact (12) à tester, une valeur de confiance (K) pour chacun de la pluralité de ports de sortie (14) de l'au moins un autre artefact (16) à tester ; et
entraîner (S3') l'algorithme d'apprentissage automatique (A1) par un algorithme d'optimisation (A2), lequel calcule une valeur extrême d'une fonction de perte, en particulier par utilisation de l'apprentissage stochastique, pour configurer le système de test virtuel.

12. Procédé mis en oeuvre sur ordinateur selon la revendication 11, l'algorithme d'optimisation (A2) calculant, par utilisation de noms, en particulier de désignations alphabétiques ou alphanumériques, et/ou de métadonnées, en particulier un type de données, des ports d'entrée (10) de l'artefact (12) à tester, une allocation de ports de sortie (14) de l'au moins un autre artefact (16) à tester.

13. Procédé mis en oeuvre sur ordinateur selon la revendication 11 ou 12, les valeurs de confiance (K) du deuxième ensemble de données d'apprentissage (DS) étant inférieures à une première valeur seuil prédéterminée, en particulier inférieures à 99 %, et supérieures ou égales à une deuxième valeur seuil prédéterminée (SW2), en particulier supérieures ou égales à 80 %.

14. Procédé mis en oeuvre sur ordinateur selon l'une des revendications 11 à 13, l'algorithme d'apprentissage automatique (A1) étant entraîné sur la base d'une acceptation ou d'une non-acceptation, par un utilisateur, d'une allocation d'un port de sortie (14) présentant une valeur de confiance (K) la plus élevée, effectuée par l'algorithme d'apprentissage automatique (A1), ou d'une non-allocation d'un port de sortie (14) de l'au moins un autre artefact (16) à tester.

15. Programme informatique avec code de programme, pour mettre en oeuvre au moins l'un des procédés selon l'une des revendications 1 à 10 et 11 à 14, lorsque le programme informatique est exécuté sur un ordinateur.

16. Support de données lisible par ordinateur avec code de programme d'un programme informatique, destiné à mettre en oeuvre au moins l'un des procédés selon l'une des revendications 1 à 10 et 11 à 14, lorsque le programme informatique est exécuté sur un ordinateur.
